# EUROPÄISCHE PATENTSCHRIFT

(11) **EP 3 151 807 B1**
(45) Veröffentlichungstag und Bekanntmachung des Hinweises auf die Patenterteilung: **11.09.2019**
(21) Anmeldenummer: 15724522.6
(22) Anmeldetag: 22.05.2015
(51) Int. Cl.: A61J 1/06

(54) **BEHÄLTNIS**
CONTAINER
RÉCIPIENT

(30) Priorität: 06.06.2014 DE 102014008611
(43) Veröffentlichungstag der Anmeldung: 12.04.2017
(73) Patentinhaber: Kocher-Plastik Maschinenbau GmbH, 74429 Sulzbach-Laufen (DE)
(72) Erfinder: GESER, Johannes, 70839 Gerlingen (DE); SPALLEK, Michael, 55218 Ingelheim (DE); HAMMER, Alexander, 74405 Gaildorf (DE); BEIER, Alexander, 74420 Oberrot (DE)
(74) Vertreter: Bartels und Partner, Patentanwälte
(86) Internationale Anmeldenummer: PCT/EP2015/001055
(87) Internationale Veröffentlichungsnummer: WO 2015/185187

(56) Entgegenhaltungen:
- EP-A1- 2 202 042
- WO-A1-98/15314
- WO-A2-2014/009850
- DE-A1- 2 850 386
- DE-A1- 3 445 542
- US-A- 4 746 025

## Beschreibung

Die Erfindung betrifft ein Behältnis, insbesondere eine im Blasformverfahren hergestellte, in der Form gefüllte und verschlossene Kunststoff-Ampulle oder Flasche, mit den Merkmalen im Oberbegriff von Anspruch 1.

Behältnisse dieser Art, bei denen der Behältniskörper aus einem thermoplastischen Material, etwa Polyethylen niedriger oder hoher Dichte, Polypropylen oder ähnlichen Stoffen hergestellt ist, die mit den vorgesehenen Behälterinhalten kompatibel sind, sind bekannt, vgl. WO 2008/098602 A1. Solche, beispielsweise nach dem bekannten bottelpack®-Verfahren hergestellte Behältnisse dienen üblicherweise der Aufnahme und Abgabe von Flüssigkeiten für medizinische oder kosmetische Zwecke, wobei die Abgabe der Flüssigkeit über den im Halsteil des Behältniskörpers sitzenden Einsatz erfolgt. Dessen Austritts- oder Abgabeende ist entsprechend dem vorgesehenen Anwendungszweck vorgeformt. Wie dies in dem vorstehend genannten Dokument gezeigt ist, kann diesbezüglich beispielsweise ein einen Tropfer bildenden Ausgang für die unmittelbare Abgabe von Tropfen, etwa von Augentropfen, vorgesehen sein, wobei das Freilegen einer Tropferöffnung durch Abschrauben einer Behältnis-Verschlusskappe erfolgen kann. Für eine Abgabe über eine Injektionsnadel kann am Abgabebereich des Einsatzes auch eine Anschlusseinrichtung für eine Injektionsnadel oder einen Kunststoffdorn vorgesehen sein, wobei am Einsatz ein durch einen Dorn oder eine Injektionsnadel durchstechbarer Perforationsbereich ausgebildet sein kann. Ungeachtet der speziellen Ausbildung des Abgabebereichs kann dieser von einer End- oder Verschlusskappe abgedeckt sein, die vor der Benutzung des Behälterinhalts vom Einsatz abgenommen wird.

Für die Gebrauchssicherheit derartiger Behältnisse ist es ausschlaggebend, dass bei dem in der Herstellform erfolgenden Anformen des Halsteils an den daran anliegenden Umfangsbereich des Einsatzes dieser im Sitz des Halsteils derart sicher festgelegt wird, dass es auch bei im Gebrauch am Abgabebereich des Einsatzes angreifenden Belastungen nicht zu einer Beeinträchtigung der Abdichtung zwischen Sitz und Einsatz kommt und damit ein Auslaufen, eine erhöhte Permeation oder eine mikrobiologische Kontamination des Behälterinhalts sicher ausgeschlossen werden kann.

Die US 4 746 025 beschreibt ein gattungsgemäßes Behältnis, insbesondere eine im Blasformverfahren hergestellte, in der Form gefüllte und verschlossene Kunststoff-Ampulle oder Flasche, mit einem sich an einen Behältniskörper als axialer Fortsatz anschließenden hülsenartigen Halsteil, das einen Sitz für einen vorgeformten, sich entlang der Achse des Halsteils erstreckenden Einsatz als Teil des Behältnisses bildet und in der Form an einen Umfangsbereich des Einsatzes angeformt ist, wobei am Einsatz zumindest ein Dichtelement vorgesehen ist, das in Zusammenwirkung mit einer am Sitz des Halsteils ausgebildeten Anlagefläche eine Abdichtung in einem die Achse umgebenden Dichtbereich bildet, wobei das Dichtelement durch den der Anlagefläche am Sitz des Halsteils zugewandten Rand eines am Einsatz ausgebildeten Ringes gebildet ist, wobei das Dichtelement durch thermischen Eintrag geschmolzen mit dem sonstigen benachbarten Kunststoffmaterial der Anlagefläche eine feste, fluidundurchlässige Barriere ausbildet.

Weitere Behältnisse gehen aus der DE 28 50 386 A1, die EP 2 202 042 A1 der WO 98/15314 A1, der DE 34 45 542 A1 und der WO 2014/009850 A2 hervor.

Im Hinblick auf diese Problematik stellt sich die Erfindung die Aufgabe, ein Behältnis der betrachteten Gattung zur Verfügung zu stellen, bei dem eine sichere Abdichtung zwischen Behälter-Halsteil und Einsatz gewährleistet ist und das insbesondere für medizinische, kosmetische oder technische Zwecke, aber auch für Getränke oder Nahrungsmittel eingesetzt werden kann, wobei als Füllgüter Flüssigkeiten, Suspensionen, Emulsionen, Salben, Cremes oder Gele in Frage kommen.

Erfindungsgemäß ist diese Aufgabe durch ein Behältnis gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass das ringförmige Dichtelement die Form einer axial vorstehenden Rippe besitzt.

Es ist ferner vorgesehen, dass am Einsatz zumindest ein Dichtelement vorgesehen ist, das in Zusammenwirkung mit einer am Sitz des Halsteils ausgebildeten Anlagefläche eine Abdichtung in einem die Achse umgebenden Dichtbereich bildet. Bei Vorhandensein eines am Einsatz vorgesehenen Dichtelements lässt sich der Vorgang des Anformens der den Sitz für den Einsatz bildenden Wandteile des Halsteils derart gestalten, dass im Sitz eine besonders sichere Dichtverbindung gebildet wird.

In besonders vorteilhafter Weise kann das Dichtelement durch ein dem Einsatz zugehöriges Formteil desselben gebildet sein. Bei durch ein Bestandteil des Einsatzes selbst gebildetem Dichtelement und dem entsprechenden Wegfall des Aufwandes für die Bereitstellung eines gesonderten Dichtelements ist das erfindungsgemäße Behältnis auf besonders einfache, rationelle und kostengünstige Weise herstellbar.

Bei besonders vorteilhaften Ausführungsbeispielen ist die Anordnung so getroffen, dass das das Dichtelement bildende Formteil sich an das der Anlagefläche des Sitzes zugewandte Ende des Umfangsbereichs anschließt, an dem das Halsteil an den Einsatz angeformt ist. Dadurch ist auf besonders einfache Weise eine Axialdichtung zwischen Sitz und Einsatz realisierbar.

Um eine besonders sichere Abdichtung zu gewährleisten, kann die Rippe eine sich zu dem an der Anlagefläche anliegenden Rand hin verjüngende Gestalt besitzen, so dass in einem verhältnismäßig schmalen, definierten Dichtbereich eine gute Dichtwirkung erreichbar ist.

Bei besonders vorteilhaften Ausführungsbeispielen ist am Einsatz zumindest ein axial vorstehendes Strukturteil vorgesehen, das sich, zum Ring radial nach innen versetzt, über diesen hinaus in Richtung auf den Behältniskörper erstreckt. Durch Anlage an der Innenwand eines zwischen Halsteil und Behältniskörper gebildeten, verengten Kragenteils ist dadurch eine Abstützung des Einsatzes gegenüber beim Gebrauch einwirkenden Querkräften gebildet. Das Strukturteil kann in vorteilhafter Weise die Form eines koaxialen, sich in Richtung auf den Behältniskörper verjüngenden Stumpfkegels besitzen, der einen konzentrischen, zum Behältniskörper hin offenen Durchgang in der Art einer Bohrung aufweist. Die konische Außenform des Strukturteils kann sich hierbei an die Form des trichterartig ausgebildeten Kragenteils des Behältniskörpers anschmiegen.

Alternativ kann die Anordnung so getroffen sein, dass der Einsatz innerhalb des Umfangbereichs einen Hohlzylinder bildet, an dessen Innenwand mehrere axial vorstehende Strukturteile in Form von Flügeln vorgesehen sind, die mit freien Endbereichen an der Innenseite des Kragenteils anliegen.

Bei vorteilhaften Ausführungsbeispielen schließt sich an das vom Behältniskörper abgewandte Ende des Umfangsbereichs des Einsatzes ein hohler Spritzenkonus an, dessen Hohlraum mit dem zylindrisch ausgebildeten Durchgang des Stumpfkegels fluchtet, von dem er durch einen Steg getrennt ist, der ein für einen Entnahmevorgang perforierbares Wandteil bildet, das beispielsweise von einem Kunststoffhohldorn, einer Doppelendkanüle, ähnlich DIN EN ISO 7885 oder DIN 13097-5, oder doppelspitzen Injektionskanülen, wie für die Verabreichung von Insulin verwendet, durchstechbar ist.

Bei weiteren vorteilhaften Ausführungsbeispielen schließt sich an das vom Behältniskörper abgewandte Ende des Umfangsbereichs des Einsatzes ein verriegelbares Verbindungsteil mit 6 % (Luer) Außenkegel und fest verbundenem Innengewindeteil gem. EN 1707:1996 an, das durch eine Kappe dicht verschlossen wird.

Bei weiteren vorteilhaften Ausführungsbeispielen schließt sich an das vom Behältniskörper abgewandte Ende des Umfangsbereichs des Einsatzes ein verriegelbares Verbindungsteil mit einem an der Spitze geschlossenen Außenkegel und fest verbundenem Innengewindeteil, ähnlich EN 1707:1996, an, das durch Abbrechen oder Abdrehen der Spitze geöffnet wird.

Um durch das Anformen des Halsteils an den Umfangsbereich des Einsatzes diesen derart im Sitz festzulegen, dass er sowohl gegen Axialkräfte als auch gegen Drehmomente besonders gut gesichert ist, können mit Vorteil am Umfangsbereich des Einsatzes Flächenunregelmäßigkeiten gebildet sein, die durch radial vertiefte Flächenteile voneinander getrennt sind. Dadurch ergibt sich beim Anformen eine Art Formschluss zwischen Einsatz und Halsteil des Behältniskörpers.

In der bei derartigen Behältnissen an sich bekannten Weise kann an das vom Behältniskörper abgewandte Ende des Halsteils eine den Spritzenkonus oder einen jeweiligen anders geformten Entnahmebereich umschlie-βende Verschlusskappe unter Bildung einer das Ablösen vom Halsteil ermöglichenden Sollbruchstelle angeformt sein. Bei der durch einen Formschluss gebildeten sicheren Festlegung des Einsatzes gegen angreifende Drehmomente kann die Verschlusskappe auf bequeme und sichere Weise durch Abdrehen an der Sollbruchstelle abgetrennt werden, wobei an der Verschlusskappe beispielsweise ein Drehknebel zur Erleichterung eines manuellen Abdrehvorganges angeformt sein kann.

Das Dichtelement des Einsatzes kann vor dessen Einlegen in die Blasformeinrichtung energetisch behandelt, nämlich angewärmt, werden. Gegenstand der Erfindung ist auch ein Verfahren, das zur Herstellung eines Behältnisses nach einem der Patentansprüche 1 bis 14 vorgesehen ist und das die Merkmale des Patentanspruches 15 aufweist. Nachstehend ist die Erfindung anhand von in der Zeichnung dargestellten Ausführungsbeispielen im Einzelnen erläutert. Es zeigen:
- Fig. 1: in gegenüber einer praktischen Ausführungsform etwa um den Faktor 3 vergrößerter Darstellung die Vorderansicht eines Ausführungsbeispiels des erfindungsgemäßen Behältnisses;
- Fig. 2: einen gegenüber Fig. 1 um 90° verdreht gezeichneten Längsschnitt des Ausführungsbeispiels;
- Fig. 3 und 4: in gegenüber Fig. 1 und 2 etwa 2,5-fach vergrößerter Darstellung eine perspektivische Schrägansicht bzw. einen Längsschnitt des Einsatzkörpers des Ausführungsbeispiels des Behältnisses;
- Fig. 5 und 6: den Fig. 3 bzw. 4 entsprechende Darstellungen des Einsatzes für ein abgewandeltes Ausführungsbeispiel des Behältnisses;
- Fig. 7 und 8: den Fig. 3 und 4 entsprechende Darstellungen des Einsatzkörpers für ein weiter abgewandeltes Ausführungsbeispiel des Behältnisses;
- Fig. 9 und 10: in gegenüber Fig. 3 bzw. 4 weiter vergrößerter sowie abgebrochen gezeichneter Darstellung eine perspektivische Schrägansicht bzw. einen Längsschnitt des Einsatzes für ein weiter abgewandeltes Ausführungsbeispiel;
- Fig. 11: eine abgebrochene, im Maßstab von Fig. 9 und 10 gezeichnete perspektivische Schrägansicht eines Einsatzes für ein weiter abgewandeltes Ausführungsbeispiel;
- Fig. 12: in abgebrochen und aufgeschnittener Darstellung den Einsatz von Fig. 11 in am Halsteil des zugeordneten Behältnisses angebrachter Position;
- Fig. 13: eine perspektivische Schrägansicht eines Ausführungsbeispieles des Behältnisses in Form einer kleinvolumigen Flasche;
- Fig. 14: einen abgebrochenen Längsschnitt des Ausführungsbeispieles von Fig. 13, wobei lediglich der Bereich von Halsteil und Verschlusskappe gezeigt ist;
- Fig. 15: einen Längsschnitt des Einsatzes des Ausführungsbeispieles von Fig. 8 und einer schematisiert angedeuteten Heizeinrichtung, wobei der Zustand vordem Einfahren in die Heizeinrichtung gezeigt ist;
- Fig. 16: eine der Fig. 15 entsprechende Darstellung mit in die Heizeinrichtung eingefahrenem Einsatz;
- Fig. 17: einen Längsschnitt des Einsatzes in dem Zustand nach erfolgter Erwärmung in der Heizeinrichtung;
- Fig. 18: einen stark vereinfacht gezeigten Längsschnitt der Blasformeinrichtung zur Herstellung eines erfindungsgemäßen Behältnisses, wobei ein Schritt des Herstellverfahrens vor dem Einlegen des erwärmten Einsatzes gezeigt ist;
- Fig.19: den Herstellschritt bei geschlossenen Kopfbacken der Blasformeinrichtung von Fig. 18; und
- Fig. 20: einen schematisch vereinfachten Längsschnitt des aus der Blasformeinrichtung entnommenen Behältnisses.

Unter Bezug auf die Zeichnungen ist die Erfindung anhand von Ausführungsbeispielen beschrieben, bei denen ein Behältniskörper 2 ein Halsteil 4 aufweist, das einen Sitz 6 für einen Einsatz 8 bildet, über den beim Gebrauch des Behältnisses die Abgabe der im Behältniskörper 2 bevorrateten Flüssigkeit erfolgt. Bei den gezeigten Beispielen hat der Behältniskörper 2 die Form einer kollabierbaren Ampulle mit einem der Form einer Raute angenäherten Querschnitt. Der in einem Blasformverfahren aus Kunststoff hergestellte Behältniskörper 2 ist bei einem Gesamtvolumen von 2 ml für ein Füllvolumen von 1,5 ml ausgelegt und weist ein Kragenteil 10 auf, das als örtliche Verengung den Übergang zu dem einen größeren Durchmesser aufweisenden, hülsenartigen Halsteil 4 bildet. Dabei besitzt das Kragenteil 10 die Form eines Trichters, an den sich, koaxial zu einer Behälterachse 12, das Halsteil 4 in Form einer kreiszylindrischen, zur Achse 12 konzentrischen Hülse anschließt.

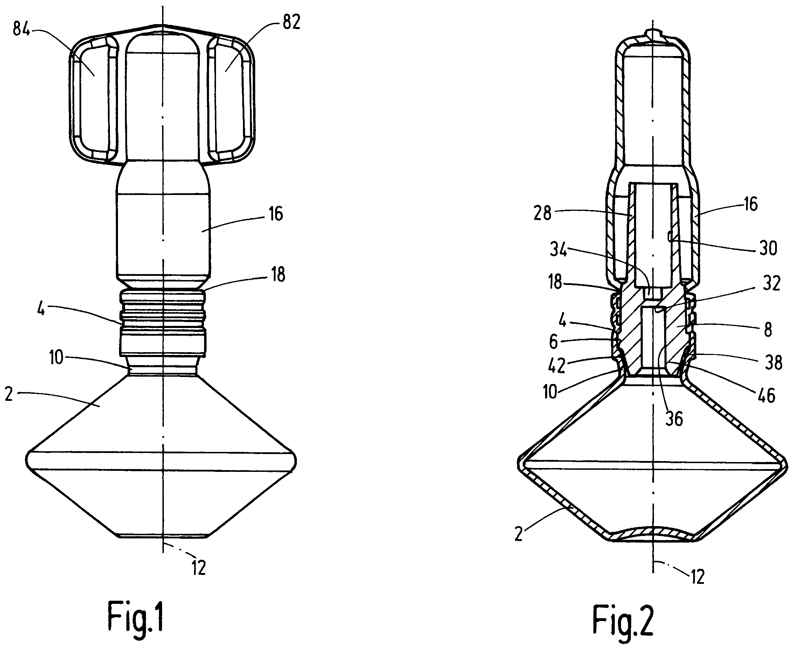

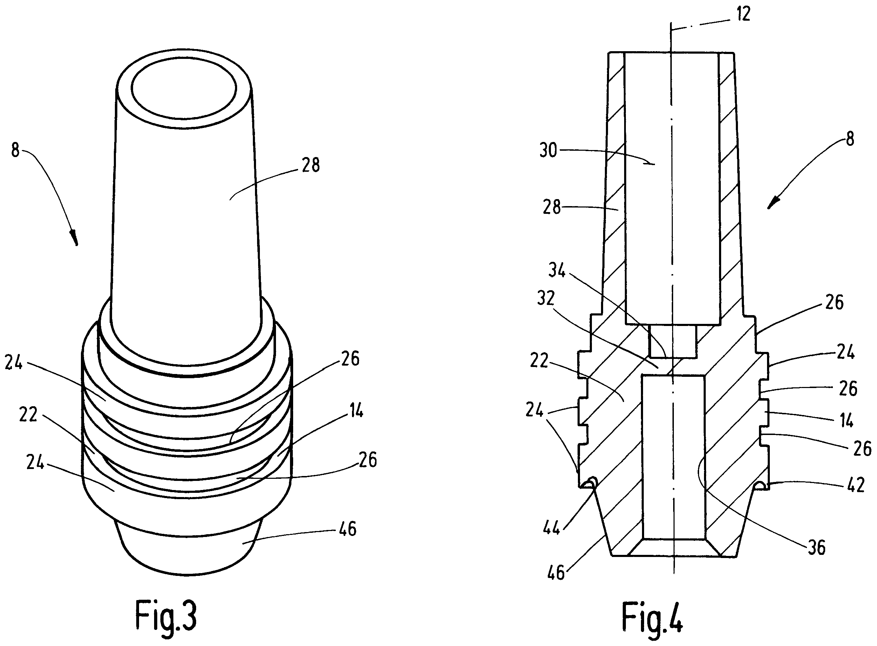

Der Einsatz 8, der in Fig. 3 und 4 jeweils gesondert dargestellt ist, hat die Form eines einteiligen, zur Achse 12 konzentrischen Rotationskörpers aus Kunststoff, wobei vorzugsweise derselbe Werkstoff oder aber ein Werkstoff derselben Werkstoffklasse vorgesehen sein kann, aus dem der Behältniskörper 2 mit Kragenteil 10 und Halsteil 4 hergestellt ist. Bei dem Herstellvorgang nach dem bottelpack®-Verfahren, bei dem ein Kunststoffschlauch in eine Blasform hinein extrudiert wird, in der mittels Hauptformbacken der Behältniskörper 2 samt Kragenteil 10 und mittels Kopfbacken die anschlie-ßenden Behälterteile wie Halsteil und gegebenenfalls eine sich daran anschließende Verschlusskappe gebildet werden, wird der Einsatz 8 in den Sitz 6 des Halsteils 4 eingesetzt, bevor die Kopfbacken geschlossen werden. Durch das darauffolgende Schließen der Kopfbacken, wie im Stand der Technik üblich, wird das Halsteil 4 an den zugeordneten Umfangsbereich 14 (s. Fig. 3 und 4) des Einsatzes 8 angeformt. Bei dem in Fig. 1 und 2 gezeigten Beispiel wird dabei gleichzeitig eine Verschlusskappe 16 an das Ende des Hülsenteils 4 angeformt, wobei am Übergang eine Sollbruchstelle 18 als lösbare Trennstelle ausgebildet wird.

Wie aus Fig. 3 und 4 zu ersehen ist, weist der Einsatz 8 ein Hauptteil 22 auf, an dem der Umfangsbereich 14 gebildet ist, an den das Halsteil 4 beim Schließen der Kopfbacken angeformt wird. Bei Durchführen des genannten bottelpack®-Verfahrens geschieht dies, nachdem der Behältniskörper 2 mittels eines Fülldorns mit dem Behälterinhalt befüllt ist. Abweichend von der Form eines glatten Zylindermantels weist das Hauptteil 22 am Umfangsbereich 14 Flächenunregelmäßigkeiten auf, die dadurch gebildet sind, dass sich neben unvertieften Oberflächenteilen 24 radial vertiefte Flächenteile 26 befinden. Beim Beispiel von Fig. 3 und 4 sind die vertieften Flächenbereiche 26 durch in Umfangsrichtung umlaufende Vertiefungen in der Art von Ringnuten gebildet, so dass die unvertieften Oberflächenbereiche 24 jeweils die Form von in axialem Abstand voneinander verlaufenden Ringrippen besitzen. Bei dieser Formgebung des Umfangsbereichs 14 entsteht beim Anformen des Halsteils 4 an das Hauptteil 22 des Einsatzes 8 eine Art Verzahnung, so dass der Einsatz 8 durch gebildeten Formschluss gegen wirkende Axialkräfte im Sitz 6 des Hülsenteils 4 gesichert ist. An das vom Sitz 6 abgewandte Ende des Hauptteils 22 des Einsatzes 8 ist ein Spritzenkonus 28 angeformt, der das Abgabeende des Einsatzes 8 bildet. Beim gezeigten Beispiel besitzt der Spritzenkonus 28 eine axiale Länge, die größer als die Länge des Hauptteils 22 ist, und weist einen inneren, koaxialen Hohlraum 30 auf, der an dem an das Hauptteil 22 angrenzenden Ende durch einen Quersteg 32 geschlossen ist, in dem ein zentraler, vertiefter Bereich 34 gebildet ist. An den Steg 32 schließt sich ein koaxialer bohrungsartiger Durchgang 36 an, die an dem dem Behältniskörper 2 zugewandten Ende des Einsatzes 8 offen ist. Durch den vertieften Bereich 34 ist im Steg 32 ein Bereich verringerter Wandstärke gebildet, der bei einem Entnahmevorgang als Perforationsbereich für einen Kunststoffhohldorn, eine Doppelendkanüle, ähnlich DIN EN ISO 7885 oder DIN 13097-5, dient, um über den Durchgang 36 Behälterinhalt zu entnehmen.

Im Sitz 6 des Halsteils 4 ist am Übergang zum Kragenteil 10 eine Stufe 38 (s. Fig. 2) gebildet, die als Anlagefläche für ein Dichtelement dient, das den Einsatz 8 im Sitz 6 abdichtet. Das Dichtelement ist durch ein Formteil des Einsatzes 8 selbst gebildet. Wie am deutlichsten aus Fig. 4 entnehmbar ist, ist hierfür an dem dem Behälterkörper 2 zugewandten Ende des Umfangsbereichs 14 ein Ring 42 entlang des Umfangsrandes ausgebildet, an den sich radial einwärts eine axiale Vertiefung 44 in Form einer Ringnut anschließt, so dass der Ring 42 eine axial vorstehende Ringrippe bildet. Diese verjüngt sich, wie Fig. 4 jedenfalls zeigt, zu dem axial vorstehenden Rand hin, mit dem sie an der Anlagefläche an der Stufe 38 des Sitzes 6 anliegt, so dass durch die spitz zulaufende Rippenform des Ringes 42 ein effektiver, schmaler Dichtbereich gebildet ist.

Radial einwärts der Vertiefung 44 schließt sich an das Hauptteil 22 ein koaxialer, sich in Richtung auf den Behältniskörper 2 verjüngender Stumpfkegel 46 an, an dessen Ende die Bohrung 36 offen ist. Wie die Fig. 2 zeigt, liegt bei der eingesetzten Position der Stumpfkegel 46 mit seiner äußeren Kegelfläche an der Innenseite des trichterartigen Kragenteils 10 an, so dass der Stumpfkegel 46 ein Strukturteil bildet, durch das der Einsatz 8 im Sitz 6 zentriert und gegen Querkräfte abgestützt ist.

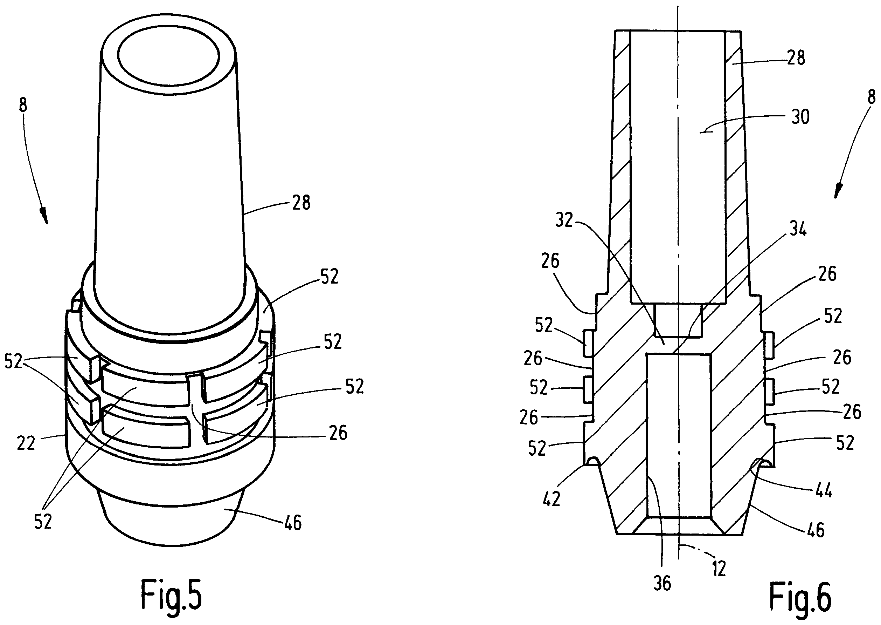

Fig. 5 und 6 zeigen ein abgewandeltes Ausführungsbeispiel, das sich vom zuvor beschriebenen Beispiel lediglich durch eine abgewandelte Formgebung der Flächenunregelmäßigkeiten am Umfangsbereich 14 des Hauptteils 22 des Einsatzes 8 unterscheidet. Anstelle der vertieften Flächenbereiche 26, die sich lediglich in Umfangsrichtung erstrecken, verlaufen beim Beispiel von Fig. 5 und 6 die vertieften Flächenbereiche 26 sowohl in Umfangsrichtung als auch in Axialrichtung, so dass am Umfangsbereich keine geschlossenen Ringrippen, sondern Rippenteile 52 gebildet sind.

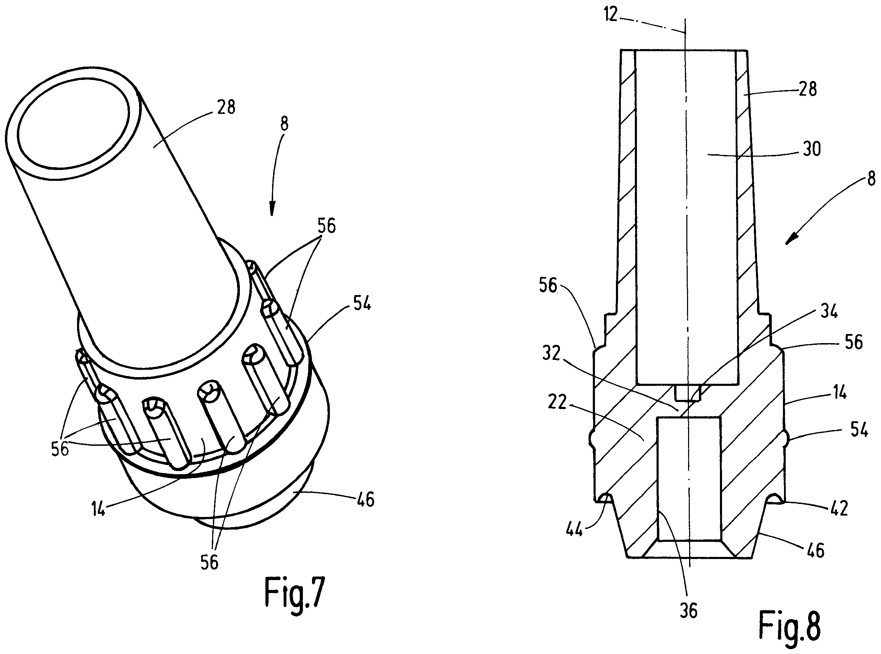

Die Fig. 7 und 8 zeigen ein Ausführungsbeispiel mit weiter abgewandelter Konfiguration des Umfangsbereichs 14 am Einsatz 8, der im Übrigen, was die Ausbildung des Dichtelements in Form eines Ringes 42 betrifft, den zuvor beschriebenen Beispielen entspricht. Wie Fig. 7 und 8 zeigen, ist in etwa im mittleren Längenabschnitt des Hauptteils 22 ein radial vorstehender Ringkörper 54 mit gerundeter, wulstartiger Form vorgesehen, von dem ausgehend sich ein Kranz von am Umfang verteilten Längsrippen 56 in Richtung auf den Spritzenkonus 28 erstreckt, wobei die Längsrippen 56 jedoch in einem Abstand vor dem Spritzenkonus 28 enden. Die Längsrippen 56 haben außenseitig, wie die Fig. 7 zeigt, jeweils eine gerundete Form. Bei dieser Konfiguration der am Umfangsbereich 14 vorgesehenen Flächenunregelmäßigkeiten ist zwischen Halsteil 4 und angeformten Einsatz 8 ein Formschluss gebildet, der den Einsatz 8 sowohl mittels der Längsrippen 56 gegen Verdrehen als auch durch den Ringkörper 54 gegen Axialbewegung sichert.

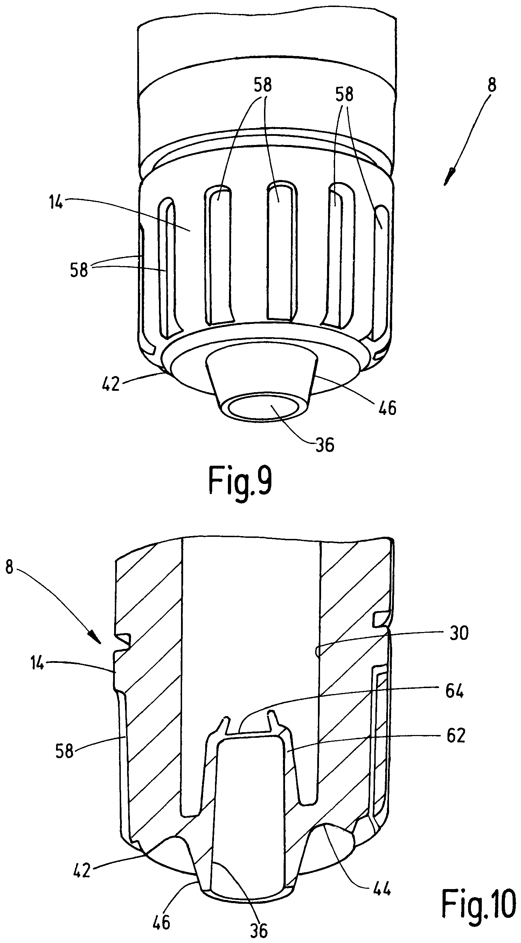

Die Fig. 9 und 10 zeigen ein weiter abgewandeltes Beispiel, bei dem am Umfangsbereich 14 des Einsatzes 8 ein Kranz von Längsnuten 58 um den Umfang verteilt angeordnet ist. Ferner sind, wie Fig. 10 zeigt, der im Stumpfkegel 46 verlaufende Durchgang 36 und der zum Abgabeende verlaufende Hohlraum 30 nicht durch einen radial verlaufenden Quersteg 32 voneinander getrennt, sondern vom Stumpfkegel 46 erstreckt sich ein Innenkonus 62 in den Hohlraum 30. Der Innenkonus 62 ist ebenfalls als Stumpfkegel geformt, der an dem im Hohlraum 30 befindlichen Ende durch eine Art Membran 64 geschlossen ist, die den Perforationsbereich bildet.

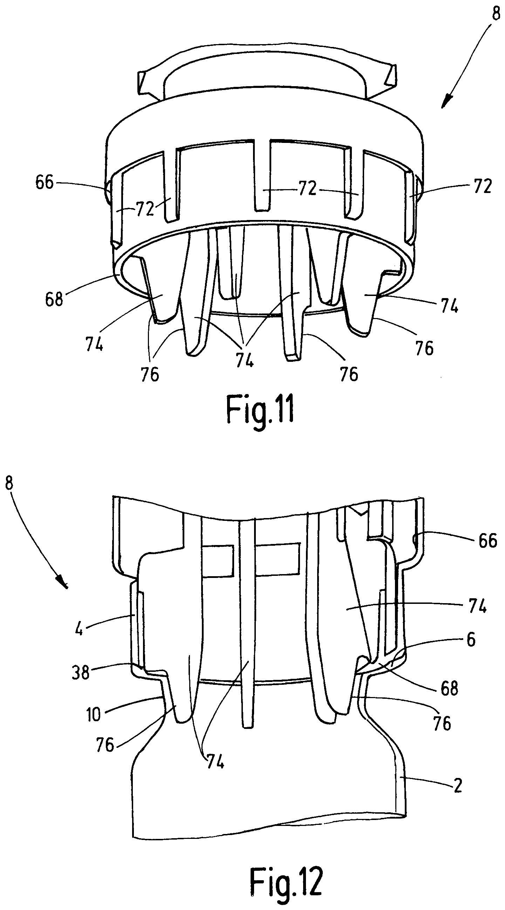

Die Fig. 11 und 12 zeigen ein Ausführungsbeispiel, bei dem der Einsatz 8 innerhalb des Umfangsbereichs 14 einen Hohlzylinder 66 bildet, dessen dem Behältniskörper 2 zugewandter Rand als Dichtelement einen Ring 68 mit gewölbter Oberfläche bildet, der an der durch die Stufe 38 gebildeten Anlagefläche am Sitz 6 des Halsteils 4 abdichtend anliegt. An der Außenseite des Hohlzylinders 66 sind als Flächenunregelmäßigkeit am Umfang verteilte Längsrippen 72 ausgebildet, die in kurzem axialem Abstand vor dem das Dichtelement bildenden Ring 68 enden. An der Innenseite des Hohlzylinders 66 sind axial vorstehende Strukturteile in Form von in Umfangsrichtung verteilt angeordneten Flügeln 74 angeformt, die sich in Radialebenen erstrecken und mit freien Endbereichen 76 bei der Einbauposition an der Innenseite des Kragenteils 10 anliegen und so auch bei größeren Durchmessern von Einsätzen 8 eine gute axiale Zentrierung im Sitz 6 gewährleisten.

Für ein bequemes Ablösen der Overmold-Verschlusskappe 16 an der Sollbruchstelle 18 ist, wie der Fig. 1 entnehmbar ist, am Endbereich der Verschlusskappe 16 ein Drehknebel mit seitlich auskragenden Griffteilen 82, 84 angeformt.

Das jeweilige Dichtelement kann eigenstabil die jeweils benötigte Dichtwirkung aufbringen; es besteht aber auch die Möglichkeit, durch thermischen Eintrag das Dichtelement 42, 68 aufzuschmelzen, das dann mit dem sonstigen benachbarten Kunststoffmaterial eine feste, fluidundurchlässige Barriere ausbildet. Etwaig beim Anschmelzen überschüssiges Kunststoffmaterial kann in die Hohlnut 44 (vgl. Fig. 4) verdrängt werden und dergestalt als zusätzliches Schweißzusatzmaterial dienen, so dass dergestalt eine homogene Schweißverbindung erreicht ist.

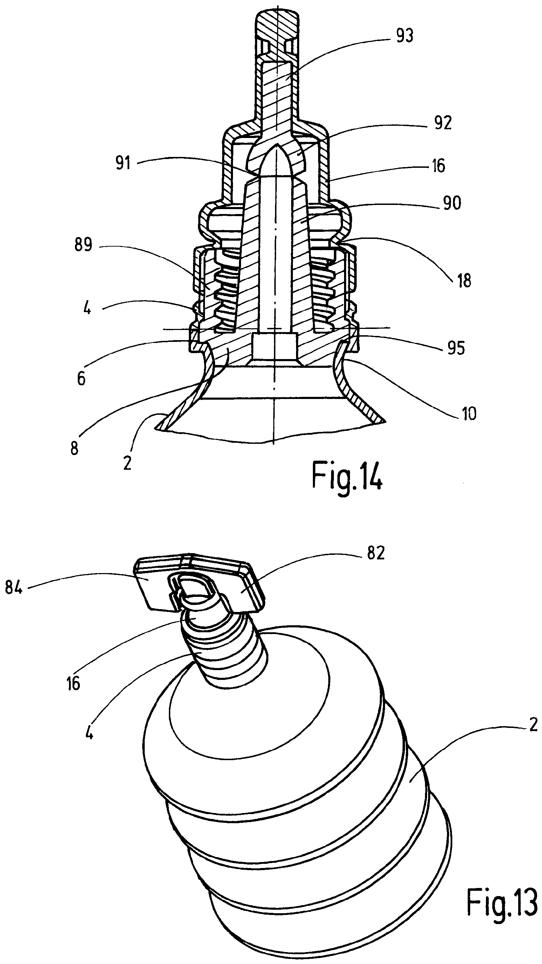

Die Fig. 13 und 14 zeigen ein abgewandeltes Ausführungsbeispiel des Behältnisses in Form einer kleinvolumigen, für eine Füllmenge von etwa 30ml vorgesehenen Flasche, bei der der Behältniskörper 2 durch einen Faltenbalg gebildet ist, der bei einem Entnahmevorgang zusammendrückbar ist. Wie die Fig. 14 zeigt, weist der Einsatz 8, der als Einlegeteil in das Hülsenteil 4 eingesetzt ist, einen Entnahmekonus in Form eines männlichen Luer-Lock 90 auf. Dieser erstreckt sich koaxial innerhalb eines Hülsenteiles 89, dessen Außenseite das Umfangsteil bildet, an das das Halsteil 14 angeformt ist. Der über das Ende des Hülsenteils 89 vorstehende Luer-Lock 90 weist ein seine Austrittsöffnung schließendes Verschlussteil 92 auf, das über eine Sollbruchstelle 91 am Luer-Lock 90 angeformt ist. Das Verschlussteil 92 weist einen axial vorstehenden Leistenkörper 93 auf, der von der Overmold-Verschlusskappe 16 dicht umschlossen ist. Dadurch ist eine formstabile Verbindung geschaffen, so dass das Verschlussteil 92 beim Abdrehen der Overmold-Verschlusskappe 16 mittels der angeformten Drehhebel 82, 84 sicher zusammen mit dieser durch Lösen der Sollbruchstelle 91 und der Trennstelle 18 abnehmbar ist.

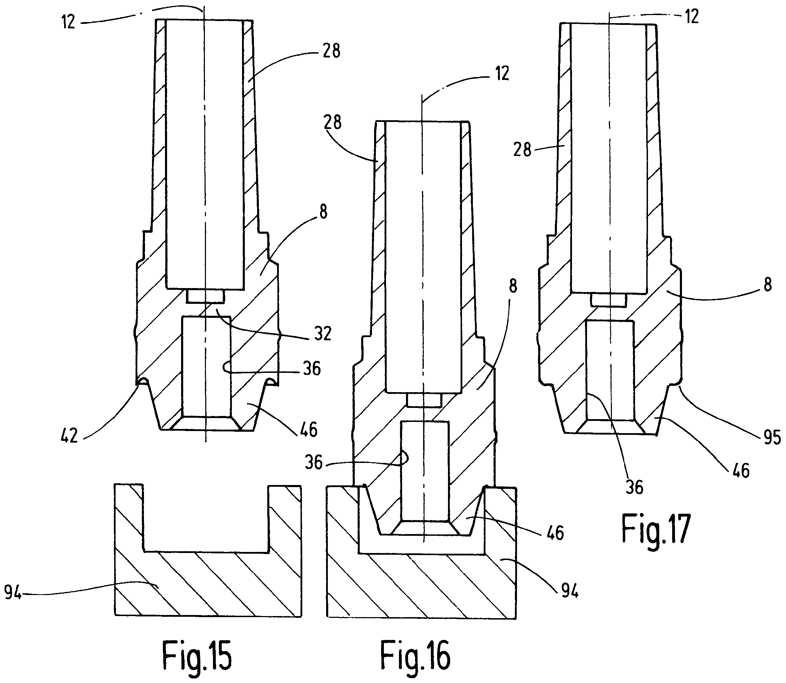

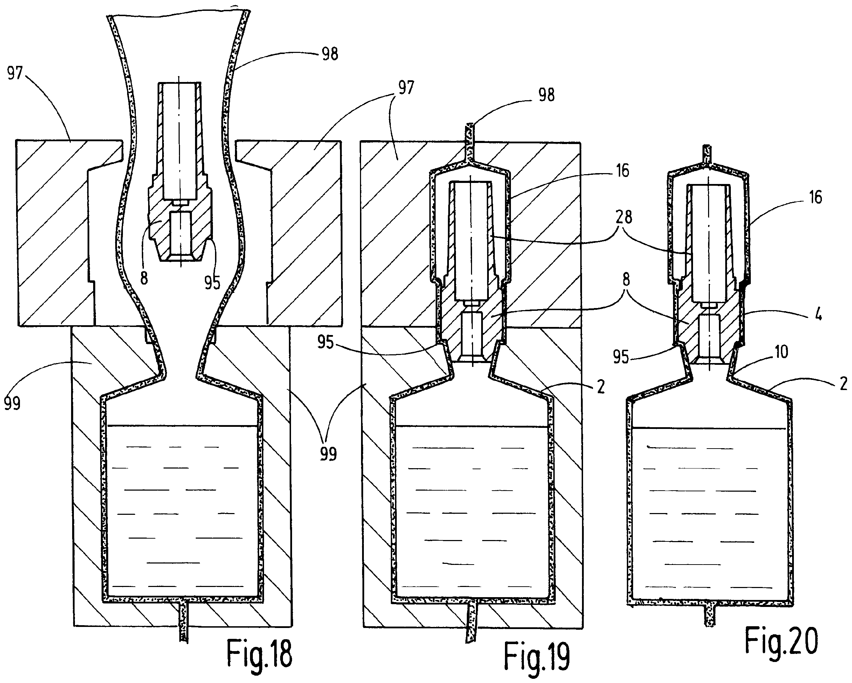

Die Fig. 15 bis 17 verdeutlichen Schritte des erfindungsgemäßen Verfahrens, das es bei der Herstellung des Behältnisses ermöglicht, eine besonders hohe mikrobiologische Dichtigkeit zwischen dem Einsatz 8 und dem Behältniskörper 2 zu erreichen. Diesbezüglich wird so vorgegangen, dass der Einsatz 8 insbesondere in dem Bereich des das Dichtelement bildenden Ringes 42 bei der Herstellung des Behältnisses gemäß dem bottelpack®-Verfahren vor dem Einsetzen in den Sitz 6 des Halsteiles 4 auf eine Temperatur von mindesten 50 bis 70 °C angewärmt wird. Dadurch wird die Bildung der Anschmelzverbindung beim Schließen der Kopfbacken 97 (Fig. 18 bis 20) erleichtert. Die Fig. 15 bis 17 verdeutlichen die Vorgehensweise. Unmittelbar vor dem Einsetzen in die Blasformeinrichtung wird der Einsatz 8 mittels einer Heizeinrichtung angewärmt, die in Fig. 15 und 16 als sogenannter Heizspiegel 94 ausgebildet ist. Die Fig. 15 zeigt den Zustand vor Anlage am Heizspiegel 94, während die Fig. 16 den Heizvorgang verdeutlicht. Das Anwärmen kann durch einen direkten Kontakt des Dichtelements 42; 68 mit einer erhitzten Fläche oder durch Anstrahlung von Wärme, z.B. mit Infrarotstrahlen oder Laserstrahlen erreicht werden oder, wenn der Einsatz 8 aus entsprechend additivierten Kunststoffen besteht, auch durch induktive Einkopplung eines elektromagnetischen Feldes stattfinden. Um die Bildung der Anschmelzverbindung zu begünstigen, kann der Einsatz 8 auch aus mehreren unterschiedlichen Materialien bestehen, z.B. hergestellt im Mehrkomponentenspritzguss. Beispielsweise kann das Dichtelement 42; 68 aus einem thermoplastischen Polymer gebildet sein, das schon bei niedriger Temperatur erweicht und ein gutes Haftvermögen zum Polymermaterial des Behälterkörpers 2 aufweist, wobei insbesondere ein thermoplastisches Elastomer (TPE) vorgesehen sein kann. Die anderen Teile des Einsatzes 8 können aus Polymeren höherer Erweichungstemperatur bestehen. Dadurch wird auch bei stärkerer Erwärmung eine hohe Dimensionsstabilität des Einsatzes 8 bei gleichzeitig dichter Verbindung durch Anschmelzen gewährleistet. Um eine besonders hohe mikrobiologische Dichtigkeit nach mechanischer Torsionsbeanspruchung zu erreichen, ist es vorteilhaft, wenn sich das jeweilige Dichtelement 42 außerhalb des Bereiches der am Einsatz 8 befindlichen, umfänglichen Flächenunregelmäßigkeiten 24, 26; 52; 54; 56; 58; 72 befindet, so dass sich die Torsionsmomente/-kräfte, z.B. beim Öffnen, nicht signifikant auf das Dichtelement 42 auswirken können.

Die Fig. 18 bis 20 zeigen die sich an das Erwärmen anschließenden Herstellschritte. Fig. 18 zeigt den Einsatz 8 unmittelbar vor dem Einsetzvorgang. Beim Einsetzvorgang wird zunächst lediglich eine axiale Anpresskraft auf den Einsatz 8 ausgeübt, um eine Anschmelzverbindung zu gewährleisten, wonach erst verzögert radiale Kräfte durch Schließen der Kopfbacken 97 aufgebracht werden, um die Verzahnung zwischen den Flächenunregelmäßigkeiten des Umfangsbereichs des Einsatzes 8 zu erzielen. Besonders vorteilhaft wirkt sich hierbei eine kurze Verzögerungszeit von selbst weniger als einer Sekunde zwischen diesen Vorgängen aus. Die Fig. 19 zeigt den Zustand nach erfolgtem Schließen der Kopfbacken 97, wobei die Overmold-Verschlusskappe 16 gebildet und verschlossen wird, um den in Fig. 20 gezeigten, geschlossenen Zustand des Behältnisses herzustellen.

Für den Vorgang des Anwärmens haben sich bei Benutzung von in Frage kommenden Materialien des den Behälter bildenden Schlauches 98 und des Einsatzes 8 mit Dichtelement 42; 68 folgende Temperaturbereiche bewährt:

| **Behälter material** | **Einsatz material** | **Dichtelement material** | **Dichtelement temperatur** |
|---|---|---|---|
| LDPE | LDPE | LDPE | bis zu 95-120 °C |
| LDPE | HDPE | HDPE | bis zu 130-145 °C |
| PP | PP | PP | bis zu 150-170 °C |
| PET | PET (amorph) | PET (amorph) | bis zu 70-100 °C |
| PP | PP | TPE | bis zu 120-160 °C |

## Patentansprüche

1. Behältnis, insbesondere eine im Blasformverfahren hergestellte, in der Form gefüllte und verschlossene Kunststoff-Ampulle oder Flasche, mit einem sich an einen Behältniskörper (2) als axialer Fortsatz anschließenden hülsenartigen Halsteil (4), das einen Sitz (6) für einen vorgeformten, sich entlang der Achse (12) des Halsteils (4) erstreckenden Einsatz (8) bildet, wobei der Einsatz Teil des Behältnisses ist, und in der Form an einen Umfangsbereich (14) des Einsatzes (8) angeformt ist, wobei am Einsatz (8) zumindest ein Dichtelement (42; 68) vorgesehen ist, das in Zusammenwirkung mit einer am Sitz (6) des Halsteils (4) ausgebildeten Anlagefläche (38) eine Abdichtung in einem die Achse (12) umgebenden Dichtbereich bildet, wobei das Dichtelement (42; 68) durch den der Anlagefläche (38) am Sitz (6) des Halsteils (4) zugewandten Rand eines am Einsatz (8) ausgebildeten Ringes (42; 68) gebildet ist, wobei das Dichtelement (42; 68) durch thermischen Eintrag aufgeschmolzen mit dem sonstigen benachbarten Kunststoffmaterial der Anlagefläche (38) eine feste, fluidundurchlässige Barriere ausbildet, **dadurch gekennzeichnet, dass** das ringförmige Dichtelement (42) die Form einer axial vorstehenden Rippe besitzt.

2. Behältnis nach Anspruch 1, **dadurch gekennzeichnet, dass** das Dichtelement (42; 68) durch ein dem Einsatz (8) zugehöriges Formteil desselben gebildet ist.

3. Behältnis nach Anspruch 1 oder 2, **dadurch gekennzeichnet, dass** das Dichtelement (42; 68) sich an das der Anlagefläche (38) des Sitzes (6) zugewandte Ende des Umfangsbereichs (14) anschließt, an dem das Halsteil (4) an den Einsatz (8) angeformt ist.

4. Behältnis nach einem der vorstehenden Ansprüche, **dadurch gekennzeichnet, dass** das Dichtelement (42) rippenförmig ausgebildet ist und eine sich zu dem an der Anlagefläche (38) anliegenden Rand hin verjüngende Gestalt besitzt.

5. Behältnis nach einem der vorstehenden Ansprüche, **dadurch gekennzeichnet, dass** am Einsatz (8) zumindest ein axial vorstehendes Strukturteil (46; 74) vorgesehen ist, das sich, zum ringförmigen Dichtelement (42; 68) radial nach innen versetzt, über diesen hinaus in Richtung auf den Behältniskörper (2) erstreckt.

6. Behältnis nach Anspruch 5, **dadurch gekennzeichnet, dass** das axial vorstehende Strukturteil die Form eines koaxialen, sich in Richtung auf den Behältniskörper (2) verjüngenden Stumpfkegels (46) besitzt, der einen konzentrischen, zum Behältniskörper (2) offenen Durchgang (36) aufweist.

7. Behältnis nach einem der vorstehenden Ansprüche, **dadurch gekennzeichnet, dass** der Einsatz (8) innerhalb des Umfangsbereichs (14) einen Hohlzylinder (66) bildet, an dessen Innenwand mehrere axial vorstehende Strukturteile in Form von in Umfangsrichtung verteilt angeordneten Flügeln (74) vorgesehen sind, die mit freien Endbereichen (76) an der Innenseite des Kragenteils (10) anliegen.

8. Behältnis nach einem der vorstehenden Ansprüche, **dadurch gekennzeichnet, dass** sich an das vom Behältniskörper (2) abgewandte Ende des Umfangsbereichs (14) des Einsatzes (8) ein hohler Spritzenkonus (28) anschließt, dessen Hohlraum (30) mit dem bohrungsartigen Durchgang (36) des Stumpfkegels (46) fluchtet, von der er durch einen Steg (32) getrennt ist, der ein für einen Entnahmevorgang perforierbares Wandteil (34) bildet.

9. Behältnis nach Anspruch 8, **dadurch gekennzeichnet, dass** am Umfangsbereich (14) des Einsatzes (8) Flächenunregelmäßigkeiten (24, 26; 52; 54; 56; 58; 72) vorhanden sind, die durch Oberflächenteile gebildet sind, die durch radial vertiefte oder erhöhte Flächenteile voneinander getrennt sind und gegenüber dem das ringförmige Dichtelement (42) axial in Richtung auf den Konus (28) versetzt angeordnet sind.

10. Behältnis nach einem der vorstehenden Ansprüche, **dadurch gekennzeichnet, dass** an das vom Behältniskörper (2) abgewandte Ende des Halsteils (4) eine den Spritzenkonus (28) umschließende Overmold-Verschlusskappe (16) unter Bildung einer das Ablösen vom Halsteil (4) ermöglichenden Sollbruchstelle (18) angeformt ist.

11. Behältnis nach Anspruch 10, **dadurch gekennzeichnet, dass** am Einsatz (8) ein einstückiger, männlicher Luer-Lock (40) ausgebildet ist, der am oberen Ende seines Konus (28) ein Verschlussteil (92) aufweist, das mit der Overmold-Verschlusskappe (16) verbunden und bei deren Abtrennen zusammen mit dieser zum Öffnen des Konus an einer Trennstelle (91) am Ende des Luer-Locks (90) abtrennbar ist.

12. Behältnis nach Anspruch 10 oder 11, **dadurch gekennzeichnet, dass** das Verschlussteil (92) eine sich vom Konus (28) axial weg erstreckende Leiste (93) aufweist, die in die Overmold-Verschlusskappe (16) im Bereich von als Abdrehknebel dienenden, angeformten Griffteilen (82, 84) integriert ist.

13. Behältnis nach einem der vorstehenden Ansprüche, **dadurch gekennzeichnet, dass** der Einsatz (8) aus mindestens zwei unterschiedlichen Materialien gebildet ist, von denen zumindest eines bei niedriger Temperatur erweichbar ist.

14. Behältnis nach einem der vorstehenden Ansprüche, **dadurch gekennzeichnet, dass** das erweichbare Material ein gutes Haftvermögen zum Polymermaterial des Behälterkörpers aufweisendes thermoplastisches Polymer, insbesondere ein thermoplastisches Elastomer (TPE) ist und dass ein weiteres Material aus einem Polymer mit höherer Erweichungstemperatur besteht.

15. Verfahren, das zur Herstellung eines Behältnisses nach einem der Ansprüche 1 bis 14 vorgesehen ist, **dadurch gekennzeichnet, dass** das Dichtelement (42; 68) des Einsatzes (8) vor dessen Einlegen in die Blasformeinrichtung (97, 99) energetisch behandelt, nämlich angewärmt, wird.

16. Verfahren nach Anspruch 15, **dadurch gekennzeichnet, dass** der Vorgang des Einsetzens des Einsatzes (8) in die Blasformeinrichtung (97, 99) derart durchgeführt wird, dass zunächst nur eine axiale Anpresskraft ausgeübt wird, um eine Anschmelzverbindung des Dichtelements (42; 68) am Sitz (6) des Halsteils (4) zu gewährleisten, und dass dann, verzögert, radiale Kräfte durch Schließen der Kopfbacken (97) aufgebracht werden, um die Verzahnung an den Flächenunregelmäßigkeiten (24, 26; 52; 54; 56; 58; 72) des Umfangsbereichs (14) zu erzielen.

## Claims

1. Container, in particular a plastic ampoule or bottle, manufactured in a blow moulding process, filled and sealed in the mould, with a sleeve-like neck portion (4) connecting to a container body (2) as axial extension, which forms a seat (6) for a preformed insert (8) extending along the axis (12) of the neck portion (4), wherein the insert is part of the container, and is formed in the mould at a peripheral area (14) of the insert (8), wherein at least one sealing element (42; 68) is provided on the insert (8), which forms a seal in cooperation with a contact surface (38) formed on the seat (6) of the neck portion (4) in a sealing area surrounding the axis (12), wherein the sealing element (42; 68) by the edge of a ring (42; 68) formed on the insert (8), facing the contact surface (38), on the seat (6) of the neck portion (4), wherein the sealing element (42; 68), melted by thermal input with the other adjacent plastic material of the contact surface (38), forms a solid, fluid-impermeable barrier, **characterised in that** the ring-shaped sealing element (42) has the shape of an axially projecting rib.

2. Container in accordance with claim 1, **characterised in that** the sealing element (42; 68) is formed by a part of the mould associated with the insert (8).

3. Container in accordance with claim 1 or 2, **characterised in that** the sealing element (42; 68) is connected to the end of the peripheral region (14) facing the contact surface (38) of the seat (6), on which the neck portion (4) is moulded on the insert (8).

4. Container in accordance with one of the preceding claims, **characterised in that** the sealing element (42) is rib-shaped and has a shape tapering towards the edge abutting the contact surface (38).

5. Container in accordance with one of the preceding claims, **characterised in that** at least one axially projecting structural part (46; 74) is provided on the insert (8), which is radially inwardly displaced to the ring-shaped sealing element (42; 68), extending beyond this in the direction of the container body (2).

6. Container in accordance with claim 5, **characterised in that** the axially projecting structural part has the shape of a coaxial truncated cone (46), tapering in the direction of the container body (2), having a concentric passage (36) open to the container body (2).

7. Container in accordance with one of the preceding claims, **characterised in that** the insert (8) forms a hollow cylinder (66) within the peripheral region (14), on the inner wall of which several axially projecting structural parts are provided in the form of spaced vanes (74), with their free ends (76) resting on the inside of the collar portion (10).

8. Container in accordance with one of the preceding claims, **characterised in that** a hollow syringe cone (28) connects the end of the peripheral region (14) of the insert (8) remote from the container body (2), its cavity (30) aligning with the bore-like passage (36) of the truncated cone (46), from which it is separated by a crosspiece (32), which forms a wall portion (34) that can be perforated for the delivery procedure.

9. Container in accordance with claim 8, **characterised in that** surface irregularities (24, 26; 52; 54; 56; 58; 72) are present on the peripheral region (14) of the insert (8), formed by parts of the surface which are separated from one another by radially recessed or elevated areas of the surface and are axially displaced in relation to the annular sealing element (42) in the direction of the cone (28).

10. Container in accordance with one of the preceding claims, **characterised in that** at the end of the neck portion (4) remote from the container body (2) an overmould closure cap (16) surrounding the syringe cone (28) is moulded on, forming a predetermined breaking point (18) enabling detachment from the neck portion (4).

11. Container in accordance with claim 10, **characterised in that** a one-piece male Luer-lock (40) is fitted on the insert (8), which has a closure member (92) at the upper end of its cone (28), which is connected to the overmould closure cap (16) and with its separation can be separated with this to open the cone at a separation point (91) at the end of the Luer lock (90).

12. Container in accordance with claim 10 or 11, **characterised in that** the closure member (92) has a bar (93) extending axially away from the cone (28), which is integrated into the overmould closure cap (16) in the portion of the grip portions (82, 84) moulded on as a twisting knob.

13. Container in accordance with one of the preceding claims, **characterised in that** the insert (8) is formed from at least two different materials, of which at least one can be softened at low temperature.

14. Container in accordance with one of the preceding claims, **characterised in that** the softenable material is a thermoplastic polymer having good adhesiveness to the polymer material of the container body, in particular a thermoplastic elastomer (TPE), and that a further material consists of a polymer with higher softening temperature.

15. Method, that is intended for the manufacture of a container in accordance with one of the claims 1 to 14, **characterised in that** the sealing element (42; 68) of the insert (8) is energised before its insertion into the blow moulding device (97, 99), namely heated.

16. Method in accordance with claim 15, **characterised in that** the operation of putting the insert (8) into the blow moulding device (97, 99) is carried out so that only an axial pressure is applied initially, to ensure a fusion joint of the sealing element (42; 68) to the seat (6) of the neck portion (4), and that then, deferred, radial forces are applied by closing the head jaws (97), to produce the toothing on the surface irregularities (24, 26; 52; 54; 56; 58; 72) of the peripheral region (14).

## Revendications

1. Récipient, notamment ampoule bouteille en matière plastique, fabriquée par un procédé de moulage par soufflage, remplie et fermée dans le moule, ayant une partie (4) formant col, de type en manchon, qui se raccorde, sous la forme d'un prolongement axial, à un corps (2) du récipient et qui forme un siège (6) pour un insert (8) préformé et s'étendant suivant l'axe (12) de la partie (4) formant col, l'insert faisant partie du récipient, et qui est formé dans le moule sur une partie (14) de pourtour de l'insert (8), dans lequel sur l'insert est prévu au moins un élément (42 ; 68) d'étanchéité, qui, en coopération avec une surface (38) de contact constituée sur le siège (6) de la partie (4) formant col, forme une région d'étanchéité entourant l'axe (12), l'élément (42 ; 68) d'étanchéité étant formé par le bord, tourné vers la surface (38) de contact du siège (6) de la partie (4) formant col, d'une bague (42 ; 68) constituée sur l'insert (8), l'élément (42 ; 68) d'étanchéité fondu par apport thermique constituant, avec l'autre matière plastique voisine de la surface (38) de contact, une barrière solide imperméable au fluide, **caractérisé en ce que** l'élément (42) d'étanchéité annulaire a la forme d'une nervure en saillie axialement.

2. Récipient suivant la revendication 1, **caractérisé en ce que** l'élément (42 ; 68) d'étanchéité est formé par une pièce moulée de l'insert (8), qui lui est associée.

3. Récipient suivant la revendication 1 ou 2, **caractérisé en ce que** l'élément (42 ; 68) d'étanchéité se raccorde à l'extrémité, tournée vers la surface (38) de contact du siège (6), de la région (14) de pourtour où la partie (4) formant col est moulée sur l'insert (8).

4. Récipient suivant l'une des revendications précédentes, **caractérisé en ce que** l'élément (42) d'étanchéité est constitué sous la forme d'une nervure et a une forme se rétrécissant vers le bord s'appliquant à la surface (38) de contact.

5. Récipient suivant l'une des revendications précédentes, **caractérisé en ce qu'**il est prévu sur l'insert (8) au moins une partie (46 ; 74) de structure en saillie axialement, qui, en étant décalée vers l'intérieur radialement par rapport à l'élément (42 ; 68) d'étanchéité annulaire, s'étend au-delà de celui-ci dans la direction du corps (2) du récipient.

6. Récipient suivant la revendication 5, **caractérisé en ce que** la partie de structure en saillie axialement possède la forme d'un tronc de cône (46) coaxial se rétrécissant dans la direction du corps (2) du récipient, tronc de cône qui a un passage (36) concentrique ouvert vers le corps (2) du récipient.

7. Récipient suivant l'une des revendications précédentes, **caractérisé en ce que** l'insert (8) forme à l'intérieur de la région (14) de pourtour un cylindre (66) creux sur la paroi intérieure duquel sont prévues, sous la forme d'ailes (74) réparties dans la direction du pourtour, plusieurs parties de structure en saillie axialement, qui s'appliquent, par des régions (76) d'extrémité libre, au côté intérieur de la partie (10) formant collet.

8. Récipient suivant l'une des revendications précédentes, caractérisé à ce qu'à l'extrémité, loin du corps (2) du récipient, de la région (14) de pourtour de l'insert (8), se raccorde un cône (28) creux de projection, dans la cavité (30) est aligné, avec le passage (36) de type en trou du tronc de cône (46), dont il est séparé par une âme (32), qui forme une partie (34) de paroi pouvant être perforée pour un prélèvement.

9. Récipient suivant la revendication 8, **caractérisé en ce que**, sur la partie (14) de pourtour de l'insert (8), sont prévues des irrégularités (24, 26 ; 52 ; 54 ; 56 ; 58 ; 72) de surface, formées par des parties de surface, qui sont séparées les unes des autres par des parties de surface renfoncées ou surélevées radialement et qui sont disposées de manière décalée axialement dans la direction du cône (28) par rapport à l'élément (42) d'étanchéité annulaire.

10. Récipient suivant l'une des revendications précédentes, **caractérisé en ce que**, à l'extrémité, loin du corps (2) du récipient, de la partie (4) formant col, un capuchon (16) de fermeture d'overmold entourant le col (28) d'injection est moulé en formant un point (18) destiné à se rompre, permettant de séparer la partie (4) formant col.

11. Récipient suivant la revendication 10, **caractérisé en ce que** sur l'insert (8) est constitué un luer-lock (90) mâle d'une seule pièce, qui a, à l'extrémité supérieure de son cône (28), une partie (92) de fermeture, laquelle est reliée au capuchon (16) de fermeture d'overmold et qui, lors de sa séparation, peut, ensemble avec celui-ci, être séparé pour ouvrir le cône à un point (91) de séparation à l'extrémité du luer-lock (90).

12. Récipient suivant la revendication 10 ou 11, **caractérisé en ce que** la partie (92) de fermeture a une barrette (93), qui s'éloigne axialement du cône (28) et qui est intégrée dans le capuchon (16) de fermeture d'Overmold dans la région des parties (82, 84) de préhension servant de manette de rotation.

13. Récipient suivant l'une des revendications précédentes, **caractérisé en ce que** l'insert (8) est en au moins deux matériaux différents, dont l'un au moins peut se ramollir à une température basse.

14. Récipient suivant l'une des revendications précédentes, **caractérisé en ce que** le matériau qui peut se ramollir est un polymère thermoplastique ayant un bon pouvoir d'adhérence au matériau polymère du corps du corps du récipient, en étant notamment en élastomère thermoplastique (TPE) et **en ce qu'**un autre matériau est en un polymère ayant une température de ramollissement plus haute.

15. Procédé prévu pour fabriquer un récipient suivant l'une des revendications 1 à 14, **caractérisé en ce que** l'on traite énergétiquement, à savoir on réchauffe l'élément (42 ; 68) d'étanchéité de l'insert (8) avant de l'introduire dans le dispositif (97, 99) de moulage par soufflage.

16. Procédé suivant la revendication 15, **caractérisé en ce que** l'on effectue l'opération d'insertion de l'insert (8) dans le dispositif (97, 99) de moulage par soufflage de manière à appliquer d'abord seulement une force de pression axiale pour assurer une liaison par fusion de l'élément (42 ; 68) d'étanchéité au siège (6) de la partie (4) formant col et **en ce que**, ensuite, de manière retardée, on applique des forces radiales par fermeture de mâchoires (97) de tête pour obtenir la denture sur les irrégularités (24, 26 ; 52 ; 54 ; 56 ; 58 ; 72) de surface de la région (14) de pourtour
